(19) Europäisches Patentamt
European Patent Office
Office européen des brevets

(11) Veröffentlichungsnummer: **0 038 459**
**B1**

# (12) EUROPÄISCHE PATENTSCHRIFT

(45) Veröffentlichungstag der Patentschrift: **10.07.85**

(51) Int. Cl.[4]: **C 08 L 21/00,** C 08 K 5/36

(21) Anmeldenummer: **81102569.1**

(22) Anmeldetag: **06.04.81**

## (54) Verfahren zur Verhinderung der Reversion bei der Herstellung von Kautschukvulkanisaten.

(30) Priorität: **17.04.80 DE 3014717**

(43) Veröffentlichungstag der Anmeldung: **28.10.81 Patentblatt 81/43**

(45) Bekanntmachung des Hinweises auf die Patenterteilung: **10.07.85 Patentblatt 85/28**

(84) Benannte Vertragsstaaten: **AT BE DE FR GB IT NL**

(56) Entgegenhaltungen:
**CH - A - 433 257**
**DE - B - 1 231 236**
**US - A - 2 695 898**
**US - A - 3 217 044**
**US - A - 3 354 131**

**AUSTRALIAN JOURNAL OF CHEMISTRY, vol. 29, 1976, p. 1573-1582**
**CHEMICAL ABSTRACTS, Band 57, Nr. 12, 10. Dezember 1962, Spalte 15312g, Columbus, Ohio, U.S.A.**

(73) Patentinhaber: **BAYER AG, Konzernverwaltung RP Patentabteilung, D-5090 Leverkusen 1 Bayerwerk (DE)**

(72) Erfinder: **Schubart, Rüdiger, Dr., An der Engelsfuhr 2, D-5070 Bergisch-Gladbach (DE)**
Erfinder: **Eholzer, Ulrich, Dr., Gerstenkamp 10, D-5000 Köln 80 (DE)**
Erfinder: **Kempermann, Theo, Dr., Friedrich-Schmidt-Strasse 16a, D-5000 Köln 41 (DE)**
Erfinder: **Roos, Ernst, Dr., Am Geus-Garten 6, D-5068 Odenthal-Osenau (DE)**

**EP 0 038 459 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Verhinderung der Reversion bei der Herstellung von Kautschukvulkanisaten aus halogenfreien Dienen.

Unter Reversion versteht man ein Wiederabfallen des Vernetzungsgrades und mechanischer Werte von Vulkanisaten (wie Zugfestigkeit, Weiterreißfestigkeit, Elastizität) bei einer Fortführung der Vulkanisation über das Optimum hinaus. Reversion tritt auf bei der Vulkanisation von Dien-Kautschuken, insbesondere Naturkautschuk und synthetischem Polyisopren, bei hohen Vulkanisationstemperaturen bzw. langen Vulkanisationszeiten, wie sie bei der Herstellung voluminöser Artikel (z. B. LKW-Reifen) erforderlich sind. Die Anwendung wirtschaftlich wünschenswerter hoher Vulkanisationstemperaturen wird durch das Auftreten der Reversion begrenzt.

Eine Verbesserung der Reversionsbeständigkeit war bisher nur in sehr begrenztem Umfang möglich.

Es ist bekannt, daß die Reversionsbeständigkeit von Vulkanisationssystemen durch Verwendung verringerter Schwefel-Dosierungen verbessert werden kann. Während bei der »Normal-Schwefel-Vulkanisation« Schwefel-Mengen von ca. 1,8—2,5 phr (Gew.-Teile, bezogen auf 100 Gew.-Teile Kautschuk) verwendet werden, arbeiten »Semi-Efficient-Systeme« mit mittleren Schwefel-Mengen von ca. 1—1,8 phr und »Efficient-Systeme« mit Schwefel-Dosierungen von unter 1 phr. Im Vergleich zur Normal-Schwefel-Vulkanisation treten mit verringerten Schwefel-Mengen jedoch Nachteile hinsichtlich Rißbeständigkeit, Weitereißfestigkeit, Abriebbeständigkeit und Cordhaftung der Vulkanisate auf, was die Anwendung der Vulkanisation mit niederen bzw. mittleren Schwefel-Mengen begrenzt. Es ist z. B. bei der Reifen-Herstellung nicht möglich, die Schwefel-Dosierung unter den Bereich mittlerer Dosierungen (ca. 1,5) zu senken.

Es ist weiter bekannt, daß die Art der verwendeten Vulkanisationsbeschleuniger einen Einfluß auf die Reversionsbeständigkeit der Kautschukmischungen hat. Während Ultra-Beschleuniger wie Dithiocarbamate, Thiurame, sowie basische Beschleuniger wie Diphenylguanidin, niedrige Reversionsbeständigkeit ergeben, verhalten sich Mercapto-Beschleuniger wie Mercaptobenzthiazol, Dibenzothiazyldisulfid und das Zinksalz des Mercaptobenzthiazols, bzw. Sulfenamid-Beschleuniger wie Benzothiazyl-2-cyclohexylsulfenamid, Benzothiazyl-2-tert.-butylsulfenamid, Benzothiazyl-2-morpholinsulfenamid und Benzothiazyldicyclohexylsulfenamid, günstiger hinsichtlich Reversionsbeständigkeit.

Es ist daher Stand der Technik, Vulkanisationssysteme für Dien-Kautschuke mit verbesserter Reversionsbeständigkeit wie folgt aufzubauen:

a) Mittlere Schwefel-Mengen (ca. 1,4—1,6 phr),
b) Mercapto- bzw. Sulfenamid-Beschleuniger (ca. 1—2 phr).

Jedoch ergeben auch derartige Vulkanisationssysteme bei hohen Vulkanisationstemperaturen (z. B. über 170°C) bzw. langer Heizdauer Reversion.

Es ist ferner bekannt, daß der Zusatz von Vulkanisationsbeschleunigern des Dithiophosphat-Typs wie Zinkdibutyl-dithiophosphat, zu den oben beschriebenen Vulkanisationssystemen die Reversionsbeständigkeit verbessert (H. Ehrend, Gummi Asbest Kunststoffe 3 c [1977] S. 68—71). Diese Beschleuniger verbessern zwar die Reversion, verkürzen aber die Anvulkanisationszeit in unerwünschter Weise. Dies stellt einen Nachteil dar, weil eine ausreichende Verarbeitungssicherheit, insbesondere bei den Anwendungsgebieten, erforderlich ist, bei denen eine Verbesserung der Reversionsbeständigkeit von besonderem Interesse ist, z. B. bei der Herstellung von LKW-Reifen, und allgemein bei der Herstellung voluminöser Artikel.

In US-PS 3 354 131 wird die Vulkanisation von Kautschuken mittels Schwefels und Vulkanisationsbeschleuniger der Gruppe Mercaptobenzthiazol und Thiazolsulfenamiden beschrieben und gelehrt, daß ein ungewünschter, vorzeitiger Vulkanisationsbeginn durch Verbindungen der Formel R—S—R verhindert werden kann.

US-PS 3 217 044 sowie DE-AS 1 231 236 beschreiben die Eignung von Polysulfidverbindungen als Vulkanisationsbeschleuniger. Chemical Abstracts 57, 15 312 g erwähnt aromatische Disulfide als Stabilisatoren für rußhaltige Kautschuke.

Aufgabe der Erfindung war es somit, ein Verfahren zur Verhinderung der Reversion bei der Herstellung von Kautschukvulkanisation bereitzustellen, bei dem die Anvulkanisationszeit nicht verkürzt wird.

Gegenstand der Erfindung ist somit ein Verfahren zur Erhöhung der Reversionsbeständigkeit, d. h. zur Verhinderung der Reversion bei der Herstellung von Kautschukvulkanisaten aus halogenfreien Dienen, in dem Schwefel und/oder Schwefelspender und Vulkanisationsbeschleuniger als Vulkanisationssystem und gegebenenfalls übliche Zusätze eingesetzt werden, dadurch gekennzeichnet, daß man

a) 0,1—5 phr Schwefel bzw. 0,2—10 phr eines Schwefelspenders,
b) 0,1—5 phr eines Beschleunigers der Mercapto- bzw. Sulfenamid-Gruppe,
c) 0—5 phr eines konventionellen Zusatzbeschleunigers und
d) 0,1—5 phr einer Verbindung der allgemeinen Formel (1)

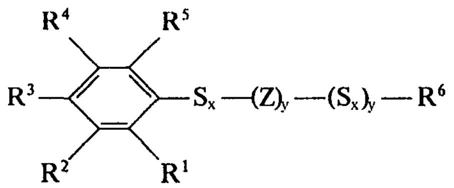

(1)

in welcher

R$_1$ bis R$_5$ gleich oder verschieden, Wasserstoff, Halogen, Nitro, Cyano, $-CF_3$, $-CCl_3$, Carboxyl, $C_1-C_4$-Alkoxy oder $C_1-C_4$-Alkyl, wobei jedoch nicht alle Reste $R_1-R_5$ gleichzeitig Wasserstoff darstellen,

x 1–4, bevorzugt 2–3,

y 0 oder 1

Z 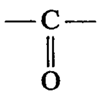 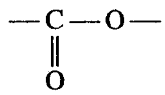 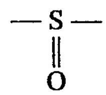 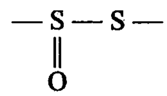 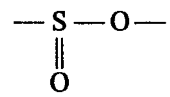

$C_1-C_{12}$-Alkylen, $C_6-C_{10}$-Arylen oder $C_8-C_{12}$-Arylalkylen und

$R^6$ den Rest

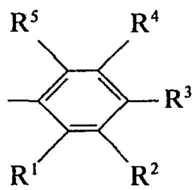

wobei die Substituenten $R_1-R_5$ die oben angegebene Bedeutung haben und ferner alle gleichzeitig Wasserstoff darstellen können;
außerdem $C_1-C_{12}$-Alkyl und $C_4-C_{12}$-Cycloalkylen, das gegebenenfalls durch $-OH$ und/oder $C_1-C_4$-Alkoxy substituiert ist;
ferner Benzyl oder Trichlormethyl bedeuten,

getrennt oder gleichzeitig dem Kautschuk zugibt und anschließend in üblicher Weise vulkanisiert.

Als Halogen seien beispielsweise Chlor, Brom, Jod genannt.

Die Alkylreste von $C_1-C_4$ können sein: Methyl, Ethyl, iso-Propyl, n-Propyl, n-Butyl, iso-Butyl, tert.-Butyl.

Die Alkoxyreste können beispielsweise darstellen: Methoxy, Ethoxy, Propoxy oder Butyloxy.

Die Alkylenreste von $C_1-C_{12}$ können sein: Methylen, Ethylen, 1,2- und 1,3-Propylen, Butylen, Pentylen, Hexylen, Octylen, Nonylen, Decylen, Undecylen, Dodecylen.

Die Alkylreste mit $C_1-C_{12}$ können aus den genannten Alkylenresten leicht abgeleitet werden.

Cycloalkylen kann von $C_4-C_{12}$ sein, wie etwa Cyclobutylen, Cyclopentylen, Cyclohexylen, Cycloheptylen, Cyclooctylen, Cyclononylen, Cyclodecylen, Cycloundecylen, Cyclododecylen.

Arylen kann sein Phenylen und Naphthylen.

Arylalkylen soll im Bereich $C_8-C_{12}$ liegen und beispielsweise o-, m-, p-Xylylen sowie die isomeren Naphthalindimethyl-Derivate darstellen.

Vorzugsweise setzt man 1–2 phr Schwefel bzw. 2–4 phr eines Schwefelspenders, 0,4–2 phr eines Beschleunigers der Gruppe b), 0–1 phr eines Beschleunigers der Gruppe c) und 0,4–2,5 phr einer Verbindung der Formel 1 ein.

Die Verbindungen d) können in reiner Form eingesetzt werden. Es ist aber auch denkbar, daß man Abmischungen dieser Produkte einsetzen kann.

Als Schwefelspender der Gruppe a) werden Verbindungen angesehen, die unter Vulkanisationsbedingungen Schwefel abspalten. Dies sind z. a. Dimorpholyldisulfid (DTDM), Tetramethylthiuramdisulfid (TMTD) oder 2-(4-Morpholinyldithio)-benzothiazol.

Als Beschleuniger der Mercaptogruppe in b) seien beispielhaft genannt:

2-Mercaptobenzthiazol (MBT),
Dibenzothiazyl-disulfid (MBTS) oder
das Zinksalz des 2-Mercaptobenzthiazols (ZMBT).

Als Beschleuniger der Sulfenamid-Gruppe in b) seien beispielsweise genannt:

Benzothiazyl-2-cyclohexylsulfenamid (CBS),

Benzothiazyl-2-tert.-butylsulfenamid (TBBS),
Benzothiazyl-2-morpholinsulfenamid (MBS),
2-(4-Morpholinyl-dithio)-benzothiazol (MBSS) oder
Morpholinyl-thiocarbonyl-sulfenmorpholid (OTOS).

Bevorzugt werden MBT, MBTS, CBS, TBBS und MBS.
Als konventionelle Zusatzbeschleuniger in c) seien beispielhaft genannt:

Tetramethylthiuram-disulfid (TMTD),
Tetramethylthiurammonosulfid (TMTM),
Zink-N-dimethyl-dithiocarbamat (ZDMC),
Zink-N-diethyl-dithiocarbamat (ZDEC),
Zink-N-dibutyldithio-carbamat (ZDBC),
Zink-N-ethylphenyldithiocarbamat (ZEPC) oder
Zink-N-penta-methylen-dithiocarbamat (Z5MC).

Beispielhaft seien folgende Verbindungen d) genannt:

Bis-(Pentachlorphenyl)-disulfid,
Bis-(Pentachlorphenyl)-trisulfid,
Bis-(Pentachlorphenyl)-tetrasulfid,
Bis-(Pentachlorphenyl)-dithio-methan,
Bis-(Pentachlorphenyl)-dithio-1,2-ethan,
2-(Pentachlorphenyl-dithio)-acetaldehyd-diethylacetal,
Pentachlorphenyl-dithio-2-propan,
Pentachlorphenyl-dithio-1-propan,
Pentachlorphenyl-dithio-butan,
Pentachlorphenyl-dithio-pentan,
Pentachlorphenyl-dithio-hexan,
Pentachlorphenyl-dithio-heptan,
Pentachlorphenyl-dithio-octan,
Pentachlorphenyl-dithio-(2-ethylhexan),
Pentachlorphenyl-dithio-nonan,
Pentachlorphenyl-dithio-decan,
Pentachlorphenyl-dithio-undecan,
Pentachlorphenyl-dithio-dodecan,
Pentachlorphenyl-dithio-tert.-dodecan,
Pentachlorphenyl-dithio-cyclobutan,
Pentachlorphenyl-dithio-cyclohexan,
Pentachlorphenyl-dithio-cycloheptan,
Pentachlorphenyl-dithio-cyclooctan,
Pentachlorphenyl-dithio-cyclononan,
Pentachlorphenyl-dithio-cycloundecan,
Pentachlorphenyl-dithio-benzol,
Pentachlorphenyl-dithio-(2-methylbenzol),
Pentachlorphenyl-dithio-(4-methylbenzol),
Pentachlorphenyl-dithio-(4-butylbenzol),
Pentachlorphenyl-dithio-(4-tert.butyl-benzol),
Pentachlorphenyl-dithio-(4-chlorbenzol),
Pentachlorphenyl-dithio-(4-methoxybenzol),
Pentachlorphenyl-dithio-(2-hydroxycarbonylbenzol),
Pentachlorphenyl-dithio-(2,3,4-trichlorbenzol),
Pentachlorphenyl-dithio-(2-trichlormethylbenzol),
Pentachlorphenyl-dithio-(2-cyanobenzol),
Pentachlorphenyl-dithio-(2-trifluormethylbenzol),
Pentachlorphenyl-dithio-(2-nitro-benzol),
Pentachlorphenyl-dithio-(4-nitro-benzol),
Pentachlorphenyl-dithio-(2,4-dimethylbenzol),
Pentachlorphenyl-dithio-(2-ethanol),
Pentachlorphenyl-dithio-[2-butanol-(1)],
Pentachlorphenyl-dithio-(2-propanol),
Pentachlorphenyl-dithio-[3-butanol-(2)],
Pentachlorphenyl-dithio-[2-cyclopentanol-(1)],
Pentachlorphenyl-dithio-[2-cyclohexanol-(1)],
Pentachlorphenyl-dithio-2(2,2-dimethylethanol-1),

Pentachlorphenyl-dithio-acetat,
Pentachlorphenyl-dithio-benzoat,
Pentachlorphenyl-dithio-propionat,
Pentachlorphenyl-dithio-phenylsulfinat,
Pentachlorphenyl-dithio-(4-chlorphenylsulfinat),
Pentachlorphenyl-thiophenylsulfinat,
Pentachlorphenyl-thio-(4-chlorphenylsulfinat),
Pentachlorphenyl-dithio-(4-methylphenylsulfinat),
Pentachlorphenyl-thio-(4-methylphenylsulfinat),
Bis-Pentachlorphenyl-dithio-carbonat,
Bis-Pentachlorphenyl-trithio-carbonat,
Pentachlorphenyl-dithio-phenylsulfit,
Bis-(pentachlorphenyl-dithio)-1,2-ethan,
Bis-(pentachlorphenyl-dithio)-1,3-propan,
Bis-(pentachlorphenyl-dithio)-1,4-butan,
Bis-(pentachlorphenyl-dithio)-1,2-propan,
Bis-(pentachlorphenyl-dithio)-1,5-pentan,
Bis-(pentachlorphenyl-dithio)-1,6-hexan,
Bis-(pentachlorphenyl-dithio)-1,7-heptan,
Bis-(pentachlorphenyl-dithio)-1,8-octan,
Bis-(pentachlorphenyl-dithio)-1,9-nonan,
Bis-(pentachlorphenyl-dithio)-1,10-decan,
Bis-(pentachlorphenyl-dithio)-1,11-undecan,
Bis-(pentachlorphenyl-dithio)-1,12-dodecan,
Bis-(pentachlorphenyl-dithio)-1,4-cyclohexan,
Bis-(pentachlorphenyl-dithio)-1,2-cyclohexan,
Bis-(pentachlorphenyl-dithio)-1,3-cyclopentan,
Bis-(pentachlorphenyl-dithio)-1,4-cycloheptan,
Bis-(pentachlorphenyl-dithio)-1,2-benzol,
Bis-(pentachlorphenyl-dithio)-1,3-benzol,
Bis-(pentachlorphenyl-dithio)-1,4-benzol,
Bis-(pentachlorphenyl-dithio)-2,4-toluol,
Bis-(pentachlorphenyl-dithiomethyl)-1,2-benzol,
Bis-(pentachlorphenyl-dithiomethyl)-1,3-benzol,
Bis-(pentachlorphenyl-dithiomethyl)-1,4-benzol,
Bis-(4-Methylphenyl)-disulfid,
Bis-(4-Methylphenyl)-trisulfid,
Bis-(4-Methylphenyl)-tetrasulfid,
Bis-(4-Chlorphenyl)-disulfid,
Bis-(4-Chlorphenyl)-trisulfid,
Bis-(4-Chlorphenyl)-tetrasulfid,
Bis-(4-tert.-Butylphenyl)-disulfid,
Bis-(4-tert.-Butylphenyl)-trisulfid,
Bis-(4-tert.-Butylphenyl)-tetrasulfid,
Bis-(4-Methoxy-carbonylphenyl)-trisulfid,
Bis-(2-Hydroxy-carbonylphenyl)-disulfid,
Bis-(2-Hydroxy-carbonylphenyl)-trisulfid,
Bis-(2-Hydroxy-carbonylphenyl)-tetrasulfid,
Bis-(2-Cyanophenyl)-disulfid,
Bis-(2-Cyanophenyl)-trisulfid,
Bis-(2-Cyanophenyl)-tetrasulfid,
Bis-(2,3,4-Trichlorphenyl)-disulfid,
Bis-(2,3,4-Trichlorphenyl)-trisulfid,
Bis-(2,3,4-Trichlorphenyl)-tetrasulfid,
Pentachlorphenyl-dithio-trichlormethan,
Pentachlorphenyl-dithio-methylbenzol,
Pentachlorphenyl-dithio-phenylmethan,
Bis-(4-Methoxyphenyl)-disulfid,
Bis-(4-Methoxyphenyl)-trisulfid,
Bis-(4-Methoxyphenyl)-tetrasulfid,
Bis-(2-Nitrophenyl)-disulfid,
Bis-(2-Nitrophenyl)-trisulfid,
Bis-(2-Nitrophenyl)-tetrasulfid,
Bis-(2-Nitro-4-trifluormethylphenyl)-disulfid,

Bis-(Pentachlorphenylthio)-methan,
Bis-(2,4,5-Trichlorphenyl)-trisulfid,
Pentachlorphenyl-dithio-(4-chlorbenzol),
Pentachlorphenyl-dithio-(2-essigsäure-monoglykolester),
Pentachlorphenyl-dithio-(2-essigsäure-diethylenglykolmonoester),
Pentachlorphenyl-dithio-(2-essigsäure-ethylester).

Die genannten Verbindungen sind teilweise neu und teilweise literaturbekannt. Sie lassen sich nach literaturbekannten Verfahren herstellen, z. B. R. Otto, Journal für praktische Chemie (2) 37, 208; oder analog zur US-Patentschrift 2 695 898.

Nach dem erfindungsgemäßen Verfahren erhaltene Vulkanisate weisen Vorteile hinsichtlich Reversionsbeständigkeit nach längerer Vulkanisationszeit und/oder hohen Vulkanisationstemperaturen (z. B. 45 Min. bei 180°C), hinsichtlich mechanischer Werte, wie Spannungswert, Zugfestigkeit, Bruchdehnung, Härte, Elastizität, Weiterreißfestigkeit, Zermürbungsbeständigkeit, Ermüdungsbeständigkeit, innerer Wärmebildung (heat build up), dynamischem Fließen und Abrieb auf. Die Einzelkomponenten des Vulkanisationssystems können den Dien-Kautschuken bzw. Kautschukmischungen vor dem Vulkanisieren entweder getrennnt oder in Form eines Gemisches oder einer Kautschuk-Beschleuniger-Vormischung (vgl.: Ullmann's Encyklopädie der techn. Chemie, 3. Auflage, Verlag Urban & Schwarzenberg, München-Berlin 1957, Band 9, S. 364) zugesetzt werden.

Als Synthesekautschuk aus halogenfreien Dienen seien beispielsweise genannt:

Polyisopren, Polybutadien, Styrol-Butadien-Kautschuk, Nitrilkautschuk und deren Verschnitte.

Die Dien-Kautschuke können alle üblichen Zusätze wie Füllstoffe, insbesondere Ruße, Mineralöle, Weichmacher, Klebrigmacher, Beschleunigungsaktivatoren, insbesondere Stearinsäure, Wachse, Alterungsschutzmittel, Ozonschutzmittel, Treibmittel, Farbstoffe, Pigmente, enthalten.

Füllstoffe, wie die in der kautschukverarbeitenden Industrie verwendeten Rußsorten, weiterhin Kieselsäure, insbesondere feinteilige, in der Gasphase gewonnene Kieselsäure, sowie hydrophobische Kieselsäure und feinteilige Metalloxide, einschließlich Mischoxide und Oxid-Gemische, sind wertvolle Mischungsbestandteile.

Die Vulkanisation der Dien-Kautschuke wird im allgemeinen bei Temperaturen zwischen 100°C und etwa 300°C, bevorzugt bei 140—240°C, durchgeführt. Hierfür können alle in der Technik üblichen Vulkanisationsverfahren wie Pressenheizung, Heizung mit Heißdampf, Heißluft, Salzbad, Fließbett, Ultrahochfrequenz und Dampfrohr, verwendet werden.

Die Erfindung sei durch folgende Beispiele erläutert:

Verzeichnis der Abkürzungen und Testmethoden

MBT = 2-Mercaptobenzothiazol
MBTS = Dibenzothiazyldisulfid
ZMBT = Zinksalz des 2-Mercaptobenzothiazols
CBS = Benzothiazyl-2-cyclohexylsulfenamid
TBBS = Benzothiazyl-2-tert.-butylsulfenamid
MBSS = 2-(N-Morpholinyl-dithio-benzothiazol)
DTDM = Dimorpholyldisulfid
MBS = Benzothiazyl-2-morpholinsulfenamid
DCBS = Benzothiazyl-dicyclohexylsulfenamid
TMTD = Tetramethylthiuramdisulfid
TMTM = Tetramethylthiuram-monosulfid
ZDMC = Zink-N-dimethyldithiocarbamat
ZDEC = Zink-N-diethyldithiocarbamat
ZDBC = Zink-N-dibutyldithiocarbamat
ZEPC = Zink-N-ethylphenyldithiocarbamat
Z5MC = Zink-N-pentamethylendithiocarbamat
TMQ = polymerisiertes 2,2,4-Trimethyl-dihydrochinolin
IPPD = N-Phenyl-N'-isopropyl-p-phenylendiamin

Vulkameter:
Bayer-Vulkameter, Aufheizung jeweils 1 Min., Meßbereich 3/20 mV.

$t_s$ (30)/130°C bzw. 160°C (Min.):
Anvulkanisationszeit aus Vulkametermessung bei 130°C bzw. 160°C, Zeit bis zum Anstieg der Schubmodulkurve um 30 mm über das Minimum, bei $t_s$ (15) um 15 mm über das Minimum.

Fe—Fa (mm):
Schubmodul (Endwert minus Anfangswert); bei ansteigenden Kurven Grenzwert nach 45 Min. Laufdauer bei der angegebenen Temperatur, z. B. (160°C).

$t_{90}$ (Min.):
Ausheizzeit, Zeit bis zum Erreichen von 90% des max. Schubmoduls (Bayer-Vulkameter).
Stufenheizung:
4-mm-Klappen, Pressenheizung.
$M_{300}$ (MPa):
Spannungswert bei 300% Dehnung, DIN 53504.
F (MPa):
Zerreißfestigkeit, DIN 53504, Normring R1.
D (%):
Bruchdehnung, DIN 53504, Normring R1.
H (Shore A):
Härte Shore A, DIN 53504, Normring R1.
E (%):
Rückprall-Elastizität, DIN 53512, 4-mm-Klappe.
Struktur nach Pohle (N):
Ringstruktur.
Reversion (%):
aus Stufenheizung:

$$\frac{M_{300} \text{ nach } 45'/180°C}{M_{300} - \text{max. bei } 150°C} \times 100.$$

$\Delta T$ (°C):
Temperaturanstieg im Goodrich-Flexometer DIN 53433, Starttemp. 100°C, Stat. Vorlast 10,0 $kg/cm^2$ Hub $\pm$ 5,71 mm, Frequenz: 24 Hz.
Ermüdung:
Nach der Kettenprüfmethode: Endloser gezahnter Profilriemen von 1,6 m Länge (9 aneinandergeheftete Einzelprüfkörper) läuft unter schwacher Spannung um 4 Führungsrollen von 50 mm ∅ (scharfe Krümmung). 17600 Biegungen. Die Prüfung findet im Freien statt.
Die Bewertung erfolgt nach einer vorgegebenen Musterskala:
0 bedeutet: Keine Rißbildung
1 bedeutet: Schwache Rißbildung
Kugelzermürbung:

| | |
|---|---|
| Kugeldurchmesser | 30 mm |
| Anfangskraft | 147 N |
| Zusatzkraft in Stufen von | 49 N |
| max. Kraft | ca. 1000 N |
| Anzahl der Umdrehungen | 2000 |
| Drehzahl | 135/Min. |
| Laufzeit/Kraftstufe | 14,8 Min. |

## Beispiel 1

zeigt den Vergleich zwischen einem semi-efficient-System (1), das nur Schwefel und MBS enthält, einem System (2), das Zinkdibutyldithiophosphat als Zusatz enthält, und einem erfindungsgemäßen System (3), das Bis-pentachlorphenyltetrasulfid enthält. In einem Innenmischer wurde aus folgenden Bestandteilen eine Kautschukvormischung angefertigt:

| | |
|---|---|
| Naturkautschuk | 80,0 phr |
| Polybutadien | 20,0 phr |
| Ruß N 330 (HAF) | 55,0 phr |
| arom. Mineralöl | 3,0 phr |
| Stearinsäure | 2,5 phr |
| mikrokristallines Ozonschutzwachs | 1,0 phr |
| IPPD | 1,5 phr |
| TMQ | 1,0 phr |
| Zinkoxid | 5,0 phr |

Auf einem Laborwalzwerk werden folgende Bestandteile nachgemischt:

System 1) 1,425 phr Schwefel
1,20 phr MBS

| | | |
|---|---|---|
| System 2) | 1,425 | phr Schwefel |
| | 0,60 | phr MBS |
| | 1,20 | phr Zink-dibutyldithiophosphat |
| System 3) | 1,425 | phr Schwefel |
| | 0,60 | phr MBS |
| | 1,20 | phr Bis-pentachlorphenyl-tetrasulfid |

| | 1 | 2 | 3 |
|---|---|---|---|
| Reversionsbeständigkeit % nach 45'/180°C bezogen auf $M_{300}$ | 58 | 72 | 75 |
| Anvulkanisationszeit $t_s$ (Min.) bei 130°C | 23 | 10,7 | 17 |
| Ausvulkanisationszeit $t_{90}$ (Min.) bei 150°C | 10,3 | 7,1 | 14,4 |

System 3) gibt deutlich bessere Reversionsbeständigkeit (nach einer Übervulkanisation von 45'/180°C) als das Zinkdibutyl-dithiophosphat enthaltende System 2, und ergibt eine wesentlich höhere Anvulkanisationsbeständigkeit bei 130°C als System 2.

## Beispiel 2

Mit den folgenden Bestandteilen wurde im Innenmischer eine Kautschukvormischung hergestellt:

| | |
|---|---|
| Naturkautschuk (RSS No. 1) | 100,0 phr |
| Ruß N 330 (HAF) | 45,0 phr |
| Zinkoxid | 5,0 phr |
| Stearinsäure | 3,0 phr |
| aromat. Mineralöl | 2,5 phr |
| naphthen. Mineralöl | 2,5 phr |
| TMQ | 1,0 phr |
| IPPD | 1,5 phr |

Auf einem Laborwalzwerk wurden folgende Mischungen hergestellt:

| | | |
|---|---|---|
| Mischung 1) | 1,425 | phr Schwefel |
| | 1,20 | phr MBS |
| Mischung 2) | 1,425 | phr Schwefel |
| | 0,60 | phr MBS |
| | 1,20 | phr Bis-pentachlorphenyl-tetrasulfid |

In der folgenden Tabelle sind die durchgeführten Prüfungen und deren Ergebnisse zusammengestellt:

| Vulkametermessung | Mischung 1) | Mischung 2) |
|---|---|---|
| Aufheizung: 1 Min. | | |
| Anvulkanisationszeit $t_s$/130°C (Min.) | 23 | 17 |
| Fließzeit $t_s$/150°C (Min.) | 6,4 | 4,7 |
| Ausheizzeit $t_{90}$/150°C (Min.) | 10,3 | 14,4 |
| Schubmodul Fe—Fa/150°C (mm) | 101 | 95 |

Stufenheizung
F = Zugfestigkeit
D = Bruchdehnung
M = Spannungswert
H = Härte

| | F | D | $M_{100}$ | $M_{300}$ | H |
|---|---|---|---|---|---|
| Mischung 1, 150°C | | | | | |
| 10′ | 22,6 | 585 | 1,77 | 8,81 | 63 |
| 20′ | 22,5 | 525 | 2,41 | 11,21 | 67 |
| 30′ | 22,2 | 520 | 2,21 | 10,93 | 65 |
| 45′ | 21,3 | 520 | 2,21 | 11,17 | 65 |
| Mischung 2, 150°C | | | | | |
| 10′ | 21,9 | 600 | 1,77 | 8,77 | 63 |
| 20′ | 22,2 | 545 | 2,21 | 10,77 | 65 |
| 30′ | 22,0 | 530 | 2,17 | 10,81 | 65 |
| 45′ | 20,9 | 510 | 2,13 | 10,69 | 66 |
| Mischung 1, 180°C | | | | | |
| 10′ | 19,1 | 585 | 1,57 | 7,25 | 62 |
| 20′ | 18,5 | 595 | 1,41 | 6,73 | 61 |
| 30′ | 16,2 | 575 | 1,37 | 6,17 | 59 |
| 45′ | 16,6 | 570 | 1,41 | 6,61 | 59 |
| 60′ | 16,3 | 570 | 1,45 | 6,37 | 60 |
| Mischung 2, 180°C | | | | | |
| 10′ | 18,3 | 540 | 1,65 | 7,89 | 62 |
| 20′ | 17,8 | 530 | 1,69 | 7,89 | 61 |
| 30′ | 13,9 | 530 | 1,69 | 7,73 | 62 |
| 45′ | 17,4 | 520 | 1,77 | 8,09 | 63 |
| 60′ | 16,7 | 515 | 1,77 | 7,93 | 62 |

Das erfindungsgemäße Vulkanisationssystem 2 zeigt deutliche Vorteile vor dem Vergleichssystem 2 hinsichtlich Reversionsbeständigkeit nach Übervulkanisation bei 180°C.

Beispiel 3

zeigt einen Vergleich zwischen einem semi-efficient System (1), das nur Schwefel und MBS enthält, und einem erfindungsgemäßen System (2), das als Zusatz Bis-pentachlorphenyl-disulfid enthält. In einem Innenmischer wurde aus folgenden Bestandteilen eine Kautschukvormischung angefertigt:

| | |
|---|---|
| Naturkautschuk | 100,0 phr |
| Ruß N 330 (HAF) | 45,0 phr |
| Zinkoxid | 5,0 phr |
| Stearinsäure | 3,0 phr |
| aromatisches Mineralöl | 2,5 phr |
| naphthenisches Mineralöl | 2,5 phr |
| TMQ | 1,0 phr |
| IPPD | 1,5 phr |

Auf einem Laborwalzwerk wurden folgende Bestandteile nachgemischt:

System 1) 1,425 phr Schwefel
1,20 phr MBS
System 2) 1,425 phr Schwefel
0,60 phr MBS
1,20 phr Bis-pentachlorphenyl-disulfid

| | F | D | $M_{100}$ | $M_{300}$ | H | E | Str. |
|---|---|---|---|---|---|---|---|
| System 1, 150°C | | | | | | | |
| 20′ | 21,8 | 560 | 1,6 | 8,6 | 60 | 50 | 460 |
| 25′ | 22,5 | 580 | 1,7 | 8,3 | 60 | 49 | 375 |
| 30′ | 21,4 | 575 | 1,6 | 8,2 | 60 | 47 | 355 |
| 45′ | 21,0 | 580 | 1,5 | 7,9 | 59 | 47 | – |
| System 2, 150°C | | | | | | | |
| 20′ | 23,7 | 560 | 2,0 | 10,0 | 62 | 49 | 420 |
| 25′ | 23,7 | 560 | 2,0 | 10,1 | 62 | 49 | 400 |
| 30′ | 22,8 | 535 | 2,0 | 10,1 | 63 | 49 | 425 |
| 45′ | 21,5 | 525 | 1,9 | 9,8 | 62 | 49 | – |
| System 1, 180°C | | | | | | | |
| 10′ | 16,4 | 580 | 1,1 | 5,6 | 54 | 45 | – |
| 20′ | 14,5 | 560 | 1,1 | 4,9 | 52 | 44 | – |
| 30′ | 14,5 | 590 | 1,0 | 4,6 | 52 | 43 | – |
| 45′ | 13,3 | 570 | 1,0 | 4,6 | 52 | 44 | 77 |
| 60′ | 13,2 | 555 | 1,1 | 4,7 | 53 | 42 | 80 |
| System 2, 180°C | | | | | | | |
| 10′ | 19,2 | 550 | 1,5 | 7,8 | 57 | 47 | – |
| 20′ | 17,2 | 515 | 1,5 | 7,6 | 58 | 46 | – |
| 30′ | 15,3 | 480 | 1,5 | 7,4 | 57 | 44 | – |
| 45′ | 16,5 | 510 | 1,5 | 7,5 | 59 | 45 | 130 |
| 60′ | 16,8 | 505 | 1,5 | 7,6 | 58 | 45 | 130 |

Fortsetzung

| | F | D | $M_{100}$ | $M_{300}$ | H | E | Str. |
|---|---|---|---|---|---|---|---|
| System 1, 190°C | | | | | | | |
| 10′ | 13,2 | 550 | 1,1 | 4,6 | 51 | 45 | – |
| 20′ | 12,8 | 565 | 1,0 | 4,3 | 50 | 43 | – |
| 30′ | 13,8 | 595 | 1,1 | 4,4 | 50 | 42 | – |
| 45′ | 12,3 | 540 | 1,1 | 4,6 | 51 | 42 | 70 |
| 60′ | 13,5 | 560 | 1,1 | 4,7 | 50 | 43 | 81 |
| System 2, 190°C | | | | | | | |
| 10′ | 17,4 | 525 | 1,5 | 7,4 | 57 | 46 | – |
| 20′ | 16,6 | 510 | 1,5 | 7,1 | 56 | 43 | – |
| 30′ | 16,3 | 525 | 1,5 | 6,9 | 56 | 42 | – |
| 45′ | 15,1 | 495 | 1,5 | 7,0 | 55 | 44 | 115 |
| 60′ | 5,1 | 510 | 1,5 | 6,7 | 57 | 41 | 94 |

| | | | |
|---|---|---|---|
| Druckverformungsrest, 22 h/70°C | | | |
| System 1, 150°C | | | |
| 20′ | 37,1% | | |
| 25′ | 29,9% | | |
| 30′ | 26,1% | | |
| System 2, 150°C | | | |
| 20′ | 28,5% | | |
| 25′ | 23,8% | | |
| 30′ | 21,4% | | |
| Kettenermüdung nach 5 × $10^6$ Biegungen | | | |
| System 1 | Bewertung 1 | | |
| System 2 | Bewertung 0–1 | | |
| Goodrich-Flexometer | | | |
| System 1 | 150°C 25′ | $\Delta$T: 18°C; | Fließen: –12% |
| System 2 | 150°C 25′ | $\Delta$T: 12,9°C; | Fließen: –7,6% |
| Kugelzermürbung | | | |
| System 1 | 150°C 30′ | Zerstört nach 8 400 Umdrehungen | |
| System 2 | 150°C 30′ | Zerstört nach 11 200 Umdrehungen | |

## Beispiel 4

In einem Innenmischer wurde aus den in Beispiel 3 angeführten Bestandteilen eine Kautschukmischung auf Basis Naturkautschuk hergestellt. Auf einem Walzwerk wurden nachgemischt:

| | |
|---|---|
| Vergleichssystem A) | 1,425 phr Schwefel |
| | 1,20 phr MBS |
| Vergleichssystem B) | 1,425 phr Schwefel |
| | 1,80 phr MBS |
| Erfindungsgemäße Systeme 1–32 | 1,425 phr Schwefel |
| | 1,40 phr MBS |
| | Zusätze variabel (je 0,0058 Mol) |

Reversionsbeständigkeit nach 45′/180°C (%)

| | |
|---|---|
| Vergleichssystem A | 53,5 |
| Vergleichssystem B | 62,0 |

| System | |
|---|---|
| 1 | 77 |
| 2 | 77 |
| 3 | 71 |
| 4 | 86 |
| 5 | 71 |
| 6 | 76 |
| 7 | 77 |
| 8 | 73 |
| 9 | 73 |
| 10 | 84 |
| 11 | 82 |
| 12 | 81 |
| 13 | 74 |
| 14 | 73 |
| 15 | 66 |
| 16 | 77 |
| 17 | 79 |
| 18 | 75 |
| 19 | 76 |
| 20 | 78 |
| 21 | 82 |
| 22 | 76 |
| 23 | 76 |
| 24 | 78 |
| 25 | 68 |
| 26 | 78 |
| 27 | 78 |
| 28 | 78 |
| 29 | 78 |
| 30 | 80 |

Die in Beispiel 4 verwendeten erfindungsgemäßen Zusatzbeschleuniger, die der allgemeinen Formel 1 entsprechen, sind:

| Lfd.-Nr. | |
|---|---|
| 1 | Bis-(Pentachlorphenyl)-disulfid |
| 2 | Bis-(Pentachlorphenyl)-trisulfid |
| 3 | Bis-(Pentachlorphenyl)-tetrasulfid |
| 4 | Pentachlorphenyl-dithio-2-ethanol |
| 5 | Pentachlorphenyl-dithiocyclohexan |
| 6 | Pentachlorphenyl-dithio-trichlormethan |
| 7 | (Pentachlorphenyl-dithio)-acetaldehyd-diethylacetal |
| 8 | Bis-(pentachlorphenyl-dithio)-1,3-propan |
| 9 | Pentachlorphenyl-dithio-2-propan |
| 10 | Pentachlorphenyl-dithio-methan |
| 11 | Bis-(pentachlorphenyl-dithio)-1,2-propan |
| 12 | Pentachlorphenyl-dithio-1-propan |
| 13 | Pentachlorphenyl-dithio-phenyl-methan |
| 14 | Bis-Pentachlorphenyl-trithiocarbonat |
| 15 | Bis-(2-Methoxycarbonyl-phenyl)-trisulfid |
| 16 | Bis-(2,4,5-trichlorphenyl)-disulfid |
| 17 | Pentachlorphenyl-dithio-(4-chlorbenzol) |
| 18 | Pentachlorphenyl-dithio-benzol |
| 19 | Pentachlorphenyl-dithio-(4-methyl-benzol) |
| 20 | Bis-(2-Nitrophenyl)-disulfid |
| 21 | Pentachlorphenyl-dithio-(2-nitrobenzol) |
| 22 | Bis-(2-Nitrophenyl)-trisulfid |
| 23 | Pentachlorphenyl-dithio-(4-methylphenylsulfinat) |
| 24 | Pentachlorphenyl-thio-(4-methylphenylsulfinat) |
| 25 | Bis-(2-Hydroxycarbonyl-phenyl)-tetrasulfid |
| 26 | Pentachlorphenyl-dithio-(2-essigsäureethylester) |
| 27 | Pentachlorphenyl-dithioacetat |
| 28 | Pentachlorphenyl-thioacetat |
| 29 | Pentachlorphenyl-thiobenzoat |
| 30 | Pentachlorphenyl-thio-propionat |

**Patentansprüche**

1. Verfahren zur Verhinderung der Reversion bei der Herstellung von Kautschukvulkanisaten aus halogenfreien Dienen, in dem Schwefel und/oder Schwefelspender und Vulkanisationsbeschleuniger als Vulkanisationssystem und gegebenenfalls übliche Zusätze eingesetzt werden, dadurch gekennzeichnet, daß man

a) 0,1–5 phr Schwefel bzw. 0,2–10 phr eines Schwefelspenders,
b) 0,1–5 phr eines Beschleunigers der Mercapto- bzw. Sulfenamidgruppe,
c) 0–5 phr eines konventionellen Zusatzbeschleunigers und
d) 0,1–5 phr einer Verbindung der allgemeinen Formel

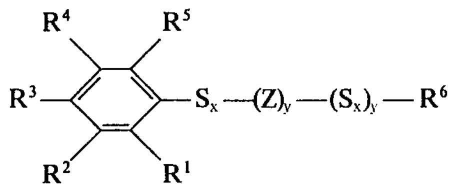

(1)

in welcher

$R_1$ bis $R_5$ gleich oder verschieden sind und Wasserstoff, Halogen, Nitro, Cyano, $-CF_3$, $-CCl_3$, Carboxyl, $C_1-C_4$-Alkoxy oder $C_1-C_4$-Alkyl, wobei jedoch nicht alle Reste $R_1-R_5$ gleichzeitig Wasserstoff darstellen,

x 1–4, bevorzugt 2–3,

y 0 oder 1

Z 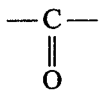 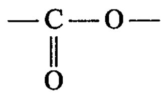 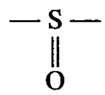 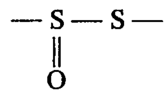 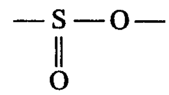

$C_1-C_{12}$-Alkylen, $C_4-C_{12}$-Cycloalkylen, $C_6-C_{10}$-Arylen, oder $C_8-C_{12}$-Arylalkylen, und

$R_6$ den Rest

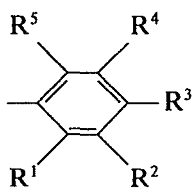

wobei die Reste $R_1-R_5$ die oben angegebene Bedeutung haben und ferner alle gleichzeitig Wasserstoff darstellen können;
$C_1-C_{12}$-Alkyl und $C_4-C_{12}$-Cycloalkylen, das gegebenenfalls durch $-OH$ und/oder $C_1-C_4$-Alkoxy, substituiert ist,
Benzyl oder Trichlormethyl bedeuten,

getrennt oder gleichzeitig dem Kautschuk zugibt und anschließend in üblicher Weise vulkanisiert.

2. Verfahren gemäß Anspruch 1, dadurch gekennzeichnet, daß man

a) 1–2 phr Schwefel bzw. 2–4 phr eines Schwefelspenders,
b) 0,4–2 phr eines Beschleunigers der Mercapto- bzw. Sulfenamidgruppe,
c) 0–1 phr eines weiteren Vulkanisationsbeschleunigers, der keine Mercapto- bzw. Sulfenamidgruppen enthält und
d) 0,4–2,5 phr einer Verbindung der allgemeinen Formel 1 gemäß Anspruch 1

dem Kautschuk getrennt oder gleichzeitig zugibt und anschließend in üblicher Weise vulkanisiert.

3. Verfahren gemäß Ansprüchen 1 und 2, dadurch gekennzeichnet, daß man die Vulkanisation bei Temperaturen von 100–300°C durchführt.

**Claims**

1. Process for preventing reversion in the production of rubber vulcanisates from halogen-free dienes, in which sulphur and/or sulphur donors and vulcanisation accelerators are used as the vulcanisation system and customary additives are optionally used, characterised in that

a) 0.1—5 phr of sulphur or 0.2—10 phr of a sulphur donor,
b) 0.1—5 phr of an accelerator of the mercapto or sulphenamide group,
c) 0—5 phr of a conventional additional accelerator and
d) 0.1—5 phr of a compound of the general formula

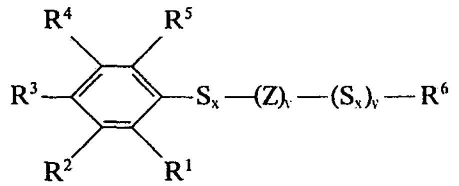 (1)

in which

$R_1$ to $R_5$ are identical or different and denote hydrogen, halogen, nitro, cyano, $-CF_3$, $-CCl_3$, carboxyl, $C_1$—$C_4$-alkoxy or $C_1$—$C_4$-alkyl, but not all of the radicals $R_1$—$R_5$ represent hydrogen at one time,
x denotes 1—4, preferably 2—3,
y denotes 0 or 1,
Z denotes

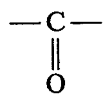 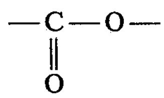 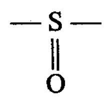 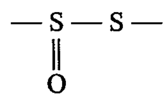 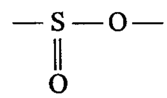

$C_1$—$C_{12}$-alkylene, $C_4$—$C_{12}$-cycloalkylene, $C_6$—$C_{10}$-arylene, or $C_8$—$C_{12}$-arylalkylene, and
$R_6$ denotes the radical

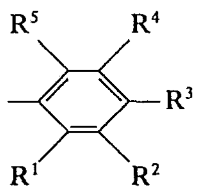

wherein the radicals $R_1$—$R_5$ have the meaning given above and furthermore all can represent hydrogen at one time; or $C_1$—$C_{12}$-alkyl or $C_4$—$C_{12}$-cycloalkylene which is optionally substituted by —OH and/or $C_1$—$C_4$-alkoxy, or benzyl or trichloromethyl,

are added to the rubber separately or simultaneously and vulcanisation is then carried out in the customary manner.

2. Process according to Claim 1, characterised in that

a) 1—2 phr of sulphur or 2—4 phr of a sulphur donor,
b) 0.4—2 phr of an accelerator of the mercapto or sulphenamide group,
c) 0—1 phr of an additional vulcanisation accelerator which does not contain any mercapto or sulphenamide groups and
d) 0.4—2.5 phr of a compound of the general formula I according to Claim 1 are added to the rubber separately or simultaneously and vulcanisation is then carried out in the customary manner.

3. Process according to Claims 1 and 2, characterised in that the vulcanisation is carried out at temperatures of 100—300°C.

**Revendications**

1. Procédé en vue d'empêcher la réversion lors de la fabrication de vulcanisats de caoutchouc à partir de diènes exempts d'halogènes, procédé dans lequel on utilise du soufre et/ou un générateur de soufre et un accélérateur de vulcanisation comme système de vulcanisation, ainsi qu'éventuellement des additifs habituels, caractérisé en ce qu'on ajoute séparément ou simultanément, au caoutchouc:

a) 0,1—5 parties de soufre ou 0,2—10 parties d'un générateur de soufre par 100 parties de caoutchouc,
b) 0,1—5 parties d'un accélérateur du groupe mercapto ou sulfénamide par 100 parties de caoutchouc,
c) 0—5 parties d'un accélérateur supplémentaire classique par 100 parties de caoutchouc, et
d) 0,1—5 parties d'un composé de formule générale (1) par 100 parties de caoutchouc:

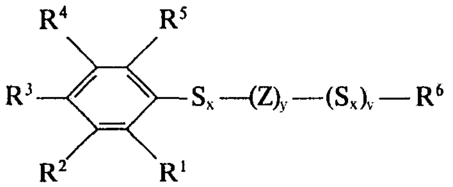

(1)

où

$R^1$ à $R^5$ sont identiques ou différents et représentent chacun un atome d'hydrogène, un atome d'halogène, un groupe nitro, un groupe cyano, $-CF_3$, $-CCl_3$, un groupe carboxy, un groupe alcoxy en $C_1$—$C_4$ ou un groupe alkyle en $C_1$—$C_4$, les radicaux $R^1$—$R^5$ ne représentant toutefois pas tous simultanément un atome d'hydrogène,
x représente 1—4, de préférence, 2—3,
y représente 0 ou 1,
Z représente

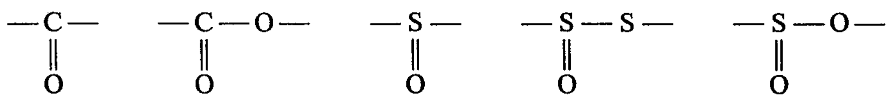

un groupe alkylène en $C_1$—$C_{12}$,
un groupe cycloalkylène en $C_4$—$C_{12}$, un groupe arylène en $C_6$—$C_{10}$ ou un groupe arylalkylène en $C_8$—$C_{12}$, et
$R^6$ représente le radical

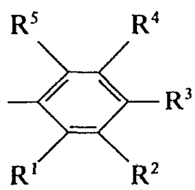

les radicaux $R^1$—$R^5$ ayant les significations indiquées ci-dessus et pouvant, en outre, représenter tous simultanément un atome d'hydrogène;
un groupe alkyle en $C_1$—$C_{12}$ et un groupe cycloalkylène en $C_4$—$C_{12}$, qui est éventuellement substitué par un groupe —OH et/ou par un groupe alcoxy en $C_1$—$C_4$,
un groupe benzyle ou un groupe trichlorométhyle,

puis on vulcanise de la manière habituelle.

2. Procédé suivant la revendication 1, caractérisé en ce qu'on ajoute séparément ou simultanément, au caoutchouc:

a) 1—2 parties de soufre ou 2—4 parties d'un générateur de soufre par 100 parties de caoutchouc,
b) 0,4—2 parties d'un accélérateur du groupe mercapto ou du groupe sulfénamide par 100 parties de caoutchouc,
c) 0—1 partie d'un autre accélérateur de vulcanisation ne contenant aucun groupe mercapto ou sulfénamide, par 100 parties de caoutchouc, et
d) 0,4—2,5 parties d'un composé de formule générale 1 suivant la revendication 1 par 100 parties de caoutchouc,

puis on vulcanise de la manière habituelle.

3. Procédé suivant les revendications 1 et 2, caractérisé en ce qu'on effectue la vulcanisation à des températures de 100—300°C.